# EUROPÄISCHE PATENTSCHRIFT

(11) **EP 1 655 583 B1**
(45) Veröffentlichungstag und Bekanntmachung des Hinweises auf die Patenterteilung: **10.09.2008**
(21) Anmeldenummer: 05110289.5
(22) Anmeldetag: 03.11.2005
(51) Int. Cl.: G01D 7/00, G01P 1/08

(54) **Verfahren und Vorrichtung zur Anzeige von Messwerten**
Method of and apparatus for producing a display from monitored data
Procédé et dispositif d'affichage des données

(30) Priorität: 04.11.2004 DE 102004053641
(43) Veröffentlichungstag der Anmeldung: 10.05.2006
(73) Patentinhaber: SIEMENS AKTIENGESELLSCHAFT, 80333 München (DE)
(72) Erfinder: Materne, Ralph-Torsten, 12623 Berlin (DE); Müller, Matthias, 38304 Wolfenbüttel (DE)

(56) Entgegenhaltungen:
- EP-A1- 1 176 400
- US-A1- 3 091 214

## Beschreibung

Die Erfindung betrifft ein Verfahren und eine Vorrichtung zur Anzeige von Messwerten gemäß den Oberbegriffen der Ansprüche 1 und 6.

Die nachfolgende Beschreibung bezieht sich im Wesentlichen auf die Anzeige von Geschwindigkeitsmesswerten, ohne dass die Erfindung auf diese Anwendung beschränkt ist. Beispielsweise kann die Erfindung auch für die Anzeige von Druck, Temperatur oder Ölstand angewendet werden.

Eine Geschwindigkeitsanzeige für Fahrzeuge, insbesondere Schienenfahrzeuge, ist aus der DE 102 52 124 A1 bekannt. Dabei ist eine analoge Messwertanzeige vorgesehen, wobei die Zuverlässigkeit der Geschwindigkeitsanzeige bezüglich der Korrektheit des Anzeigewertes durch eine zusätzliche Digitalanzeige erhöht wird. Diese zweikanalige Verarbeitung und Anzeige der Geschwindigkeit in zwei unterschiedlichen Datenformaten erfordert den Vergleich durch den Triebfahrzeugführer. Der Triebfahrzeugführer muss beide Anzeigen gezielt auf Übereinstimmung prüfen und Abweichungen erkennen, damit eine ausreichende Sicherheit erreicht werden kann. Das führt zu einer zusätzlichen Belastung des Triebfahrzeugführers, die von Betreiberseite abgelehnt wird, da der Triebfahrzeugführer vorrangig die Strecke zu beobachten hat und nur jeweils kurzzeitig auf die Geschwindigkeitsanzeige schaut.

Die US-A-3 091 214 offenbart eine Anziege mit zwei Zeigern die mit denselben Datenformaten angesteuert werden.

Der Erfindung liegt die Aufgabe zugrunde, ein Verfahren zur Anzeige von Messwerten anzugeben, bei dem die Mitwirkung eines Bedieners, insbesondere eines Triebfahrzeugführers, der eine Geschwindigkeitsanzeige überwacht, minimiert ist.

Die Aufgabe wird verfahrensgemäß mit den kennzeichnenden Merkmalen des Anspruchs 1 und vorrichtungsgemäß mit den kennzeichnenden Merkmalen des Anspruchs 6 gelöst.

Durch die mehrkanalige Ansteuerung von Segmenten eines Zeigers einer analogen Geschwindigkeitsanzeige ist der Triebfahrzeugführer von zusätzlichen Aufgaben und Belastungen weitgehend befreit. Die Erkennung einer fehlerhaften Geschwindigkeitsanzeige erfolgt intuitiv durch unplausible Darstellung des Zeigerbildes. Um die Verfügbarkeit der sicherheitskritischen Geschwindigkeitsanzeige weiter zu erhöhen, kann der Zeiger auch aus drei separat ansteuerbaren Segmenten bestehen, wobei davon ausgegangen werden kann, dass bei Übereinstimmung der Anzeige durch zwei Zeigersegmente deren Anzeigewert korrekt ist und somit der dritte Anzeigewert ignoriert werden kann.

Gemäß Anspruch 2 erfolgt die Ansteuerung der Zeigersegmente nach unterschiedlichen Algorithmen. Dadurch ergibt sich eine weitere Erhöhung der Sicherheit bezüglich der Korrektheit des Anzeigewertes. An die Verarbeitung der Geschwindigkeitsinformationen in der analogen Messwertanzeige und an deren Hardware werden keine Sicherheitsanforderungen gestellt. Es muss lediglich sichergestellt und nachgewiesen werden, dass durchgehend unterschiedliche Datenformate und Algorithmen verwendet werden und keine Funktionen implementiert sind, durch die sich eine Überführung des einen in das andere Datenformat ergeben könnte. Dies ermöglicht den Einsatz kostengünstiger Hardware.

Zusätzlich erfolgt gemäß Anspruch 3 ein verdeckter Vergleich beider Messwerte in einem dritten Datenformat mit einer Ausfalloffenbarung bei Abweichungen zwischen den Werten.

Die Sicherheit der Anzeige kann gemäß Anspruch 4 weiterhin dadurch verbessert werden, dass die Stellung der Zeigersegmente zurückgelesen und mit dem Messwert mindestens eines Datenformates verglichen wird.

Durch den verdeckten Vergleich in einem dritten Datenformat und/oder das Zurücklesen der Zeigersegmente wird die technische Erkennung bestimmter Ausfälle ermöglicht, wobei die Unabhängigkeit der Anzeigekanäle erhalten bleibt.

Vorzugsweise werden nach Anspruch 5 Geschwindigkeitsmesswerte von Fahrzeugen, insbesondere Schienenfahrzeugen, durch die erfindungsgemäße mehrkanaliger Ansteuerung mehrerer Zeigersegmente dargestellt.

Anspruch 6 charakterisiert eine Vorrichtung zur Durchführung des Verfahrens. Dabei wird die aktuelle Geschwindigkeit in Form von mindestens zwei wertgleichen Informationen in unterschiedlichen Datenformaten bereitgestellt, wobei eine Ansteuereinrichtung vorgesehen ist, die die Messwerte der unterschiedlichen Datenformate verarbeitet und jeweils zugeordnete Zeigersegmente einer analogen Messwertanzeige ansteuert.

Gemäß Anspruch 7 ist ein Zugsteuergerät mit einer zentralen Weg- und Geschwindigkeitsmesseinrichtung vorgesehen, deren Ausgangssignal direkt in einem ersten Datenformat, beispielsweise als Binärsignal, und über einen Messwertumformer in einem zweiten Datenformat, beispielsweise als ASCI-Signal, mittels eines Fahrzeugbusses der Ansteuereinrichtung zugeführt ist. Aus dem ersten Datenformat wird mittels eines ersten Algorithmus ein erstes Ansteuersignal und aus dem zweiten Datenformat mittels eines zweiten Algorithmus ein zweites Ansteuersignal erzeugt. Die beiden Ansteuersignale beaufschlagen zugeordnete Zeigersegmente eines analogen Tachometers. Beide Zeigersegmente ergeben im ausfallfreien Zustand ein dem Triebfahrzeugführer bekanntes Zeigerbild. Jede Abweichung zwischen den Werten stellt sich als unbekanntes, d. h. fehlerhaftes Zeigerbild dar, auf das der Triebfahrzeugführer gemäß einer Betriebsanweisung zu reagieren hat.

Die Vorrichtung ist nach Anspruch 8 mit einer zusätzlichen Sicherheitseinrichtung ausgestattet, bei der das erste und das zweite Datenformat jeweils Messwertumformern zur Umformung in ein drittes Datenformat, beispielsweise BCD-Format, zugeführt sind. Die umgeformten Signale sind einer Einrichtung zur technischen Ausfalloffenbarung zugeführt, welche gegebenenfalls eine Störungsmeldung generiert.

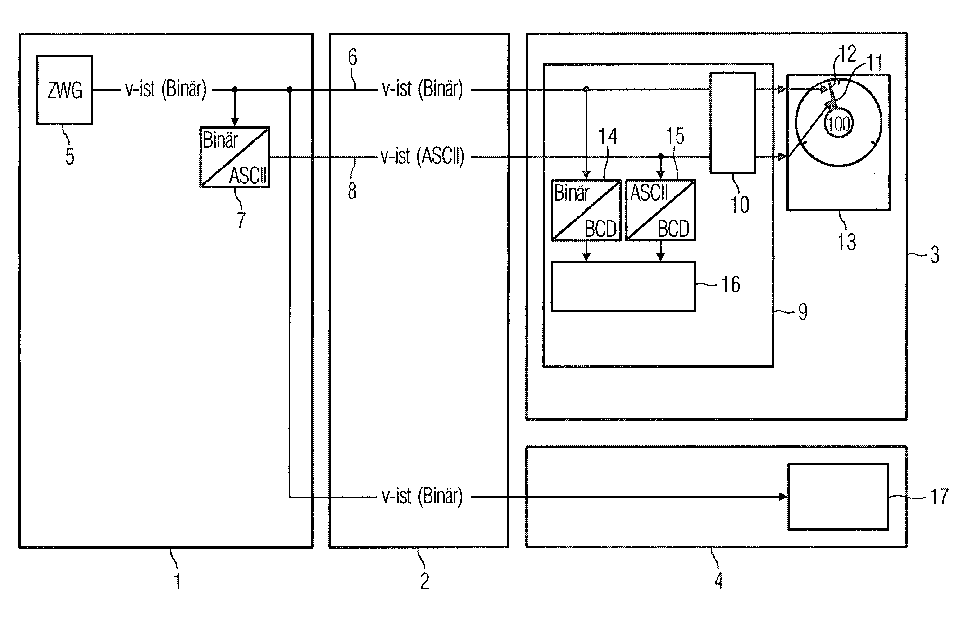

Nachfolgend wird die Erfindung anhand eines figürlich dargestellten Ausführungsbeispiels näher erläutert. Die einzige Figur zeigt schematisch das Funktionsprinzip einer verfahrensgesicherten Geschwindigkeitsanzeige.

Das Anzeigesystem besteht im Wesentlichen aus einem Zugsteuergerät 1, einem Fahrzeugbus 2, einem Führerstandsdisplay 3 und einem Diagnosedisplay 4. Das Zugsteuergerät 1 beinhaltet eine zentrale Weg- und Geschwindigkeitsmesseinrichtung (ZWG) 5, welche ein binäres Geschwindigkeitssignal 6 erzeugt. Dieses Ausgangssignal 6 ist einem Messwertumformer 7 zugeführt, der das Geschwindigkeitssignal 6 in ASCI-Format 8 umformt. Beide Geschwindigkeitssignale 6 und 8 werden über den Fahrzeugbus 2 dem Führerstandsdisplay 3 zugeführt. Das Führerstandsdisplay 3 ist mit einem Mikrorechner 9 ausgestattet, welcher eine Ansteuereinrichtung 10 aufweist. Mittels der Ansteuereinrichtung 10 werden die beiden Geschwindigkeitskanäle 6 und 8 in Binärformat und ASCI-Format separat durch unterschiedliche Algorithmen in Ansteuersignale für zugeordnete Zeigersegmente 11 und 12 einer analogen Geschwindigkeitsanzeige 13 umgewandelt. Die Zeigersegmente 11 und 12 bilden zusammen eine Tachometernadel. Dabei ergeben die unabhängig voneinander angesteuerten Zeigersegmente 11 und 12 im fehlerfreien Zustand ein einheitliches Bild, bei dem die beiden Zeigersegmente 11 und 12 zueinander fluchten. Wenn das einheitliche Bild durch Auseinanderfallen der Zeigersegmente 11 und 12 gestört ist, liegt ein Fehler vor, der von dem Triebfahrzeugführer sofort und anstrengungsfrei, quasi intuitiv, erkannt werden kann.

Zur elektronischen Auswertung der Geschwindigkeitsmesswerte ist der Mikrorechner 9 mit zwei Messwertumformern 14 und 15 ausgestattet, die den in Binärformat 6 und ASCI-Format 8 vorliegenden Messwert jeweils in ein drittes Datenformat (BCD) umwandeln, wobei die BCD-Daten in einem Vergleicher 16 auf Übereinstimmung geprüft werden. Dieser Vergleicher 16 stellt fest, ob die beiden Eingangssignale zueinander passen. Falls das nicht der Fall ist, wird eine Störungsmeldung erzeugt, die eine Auswerteeinrichtung 17 des Diagnosedisplays 4 beaufschlagt.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Anzeige von Messwerten,
**dadurch gekennzeichnet, dass** jeder Messwert in mindestens zwei unterschiedlichen Datenformaten, insbesondere in Analogformat und Digitalformat, generiert wird, wobei jeder Messwert eines bestimmten Datenformates ein zugeordnetes Zeigersegment (11,12) einer analogen Messwertanzeige ansteuert.

2. Verfahren nach Anspruch 1,
**dadurch gekennzeichnet, dass** die Ansteuerung der Zeigersegmente (11, 12) nach unterschiedlichen Algorithmen erfolgt.

3. Verfahren nach einem der vorangehenden Ansprüche,
**dadurch gekennzeichnet, dass** die unterschiedlichen Datenformate eines Messwertes in ein weiteres Datenformat transferiert und verglichen werden, wobei Abweichungen als Fehler offenbart werden.

4. Verfahren nach einem der vorangehenden Ansprüche,
**dadurch gekennzeichnet, dass** die Stellung der Zeigersegmente (11, 12) zurückgelesen und mit dem Messwert mindesten eines Datenformates verglichen wird.

5. Verfahren nach einem der vorangehenden Ansprüche,
**dadurch gekennzeichnet, dass** die Messwerte Geschwindigkeitsmesswerte (v-ist) von Fahrzeugen, insbesondere Schienenfahrzeugen, sind.

6. Vorrichtung zur Durchführung des Verfahrens nach einem der vorangehenden Ansprüche,
**dadurch gekennzeichnet, dass** der Messwert in unterschiedlichen Datenformaten, insbesondere Analogformat und Digitalformat, generiert ist, wobei jeder Messwert eines bestimmten Datenformates einer Ansteuereinrichtung (10) zugeführt ist, die ein zugeordnetes Zeigersegment (11, 12) einer analogen Messwertanzeige ansteuert.

7. Vorrichtung nach Anspruch 6,
**dadurch gekennzeichnet, dass** ein Zugsteuergerät (1) eine zentrale Weg- und Geschwindigkeitsmesseinrichtung (ZWG) (5) aufweist, deren Ausgangssignal direkt in einem ersten Datenformat, insbesondere als binäres Signal (6), und über einen Messwertumformer (7) in einem zweiten Datenformat, insbesondere als ASCI-Signal (8), mittels eines Fahrzeugbusses (2) der Ansteuereinrichtung (10) zugeführt ist, die aus dem ersten Datenformat mittels eines ersten Algorithmus ein erstes Ansteuersignal und aus dem zweiten Datenformat mittels eines zweiten Algorithmus ein zweites Ansteuersignal erzeugt, wobei das erste Ansteuersignal das erste Zeigersegment (11) und das zweite Ansteuersignal das zweite Zeigersegment (12) der analogen Messwertanzeige ansteuern.

8. Vorrichtung nach Anspruch 7,
**dadurch gekennzeichnet, dass** das erste Datenformat und das zweite Datenformat jeweils Messwertumformern (14 und 15) zur Umformung in ein drittes Datenformat, insbesondere BCD-Format, zugeführt sind, die einer Einrichtung zur technischen Ausfalloffenbarung zugeführt sind, welche gegebenenfalls eine Störungsmeldung (20) generiert.

## Claims

1. Method for displaying measured values,
**characterized in that**
each measured value is generated in at least two different data formats, in particular in analogue format and digital format, each measured value of a particular data format driving an associated pointer segment (11, 12) of an analogue measured value display.

2. Method according to Claim 1,
**characterized in that**
the pointer segments (11, 12) are driven according to different algorithms.

3. Method according to one of the preceding claims,
**characterized in that**
the different data formats of a measured value are transferred to a further data format and are compared, differences being disclosed as faults.

4. Method according to one of the preceding claims,
**characterized in that**
the position of the pointer segments (11, 12) is read back and is compared with the measured value of at least one data format.

5. Method according to one of the preceding claims,
**characterized in that**
the measured values are measured speed values (v-act) of vehicles, in particular rail vehicles.

6. Apparatus for carrying out the method according to one of the preceding claims,
**characterized in that**
the measured value is generated in different data formats, in particular analogue format and digital format, each measured value of a particular data format being supplied to a drive device (10) which drives an associated pointer segment (11, 12) of an analogue measured value display.

7. Apparatus according to Claim 6,
**characterized in that**
a train control unit (1) has a central displacement and speed measuring device (ZWG) (5) whose output signal is supplied to the drive device (10) directly in a first data format, in particular in the form of a binary signal (6), and via a measured value transducer (7) in a second data format, in particular in the form of an ASCII signal (8), using a vehicle bus (2), said drive device generating a first drive signal from the first data format using a first algorithm and generating a second drive signal from the second data format using a second algorithm, the first drive signal driving the first pointer segment (11) and the second drive signal driving the second pointer segment (12) of the analogue measured value display.

8. Apparatus according to Claim 7,
**characterized in that**
the first data format and the second data format are respectively supplied to measured value transducers (14 and 15) for conversion to a third data format, in particular BCD format, and are supplied to a device for technical failure disclosure which generates a fault message (20) if necessary.

## Revendications

1. Procédé d'affichage de valeurs de mesure,
**caractérisé en ce que**
on produit chaque valeur de mesure dans au moins deux formats de données différents, notamment un format analogique et un format numérique, chaque valeur de mesure d'un format de données déterminé commandant un segment ( 11, 12 ) d'aiguille associé d'un affichage analogique de valeurs de mesure.

2. Procédé suivant la revendication 1,
**caractérisé en ce que**
la commande des segments ( 12 ) d'aiguille s'effectue suivant des algorithmes différents.

3. Procédé suivant l'une des revendications précédentes,
**caractérisé en ce que**
les formats de données différents d'une valeur de mesure sont transférés en un autre format de données et comparés, des écarts révélant des erreurs.

4. Procédé suivant l'une des revendications précédentes,
**caractérisé en ce que**
l'on relie la position des segments ( 11, 12 ) d'aiguille et on les compare à la valeur de mesure d'au moins un format de données.

5. Procédé suivant l'une des revendications précédentes,
**caractérisé en ce que**
les valeurs de mesure sont des valeurs de mesure de vitesse ( v-réelle ) de véhicules, notamment de véhicules sur rail.

6. Dispositif pour la mise en oeuvre du procédé suivant l'une des revendications précédentes,
**caractérisé en ce que**
la valeur de mesure est produite dans des formats de données différents, notamment un format analogique et un format numérique, chaque valeur de mesure d'un format de données déterminé étant envoyée à un dispositif ( 10 ) de commande qui commande un segment ( 11, 12 ) d'aiguille associé d'un dispositif d'affichage analogique de valeurs de mesure.

7. Dispositif suivant la revendication 6,
**caractérisé en ce que**
un appareil ( 1 ) de commande de train a un dispositif ( ZWG ) ( 5 ) central de mesure du trajet et de la vitesse, dont le signal de sortie est envoyé directement dans un premier format de données, notamment sous forme d'un signal ( 6 ) binaire et par un convertisseur ( 7 ) de valeurs de mesure en un deuxième format de données, notamment sous forme d'un signal ( 8 ) ASCI au moyen d'un bus ( 2 ) de véhicule au dispositif ( 10 ) de commande qui produit à partir du premier format de données au moyen d'un premier algorithme un premier signal de commande et à partir du deuxième format de données au moyen d'un deuxième algorithme un deuxième signal de commande, le premier signal de commande commandant le premier segment ( 11 ) d'aiguille et le deuxième signal de commande le deuxième segment ( 12 ) d'aiguille du dispositif d'affichage analogique de valeurs de mesure.

8. Dispositif suivant la revendication 7,
**caractérisé en ce que**
le premier format de données et le deuxième format de données sont envoyés respectivement à des convertisseurs ( 14 et 15 ) de valeurs de mesure pour transformation en un troisième format de données, notamment en un format BCD, qui sont envoyés à un dispositif de révélation technique d'une défaillance qui produit le cas échéant un avertissement ( 20 ) de panne.
